# EUROPÄISCHE PATENTANMELDUNG

(11) **EP 1 429 438 A2**
(43) Veröffentlichungstag der Anmeldung: **16.06.2004**
(21) Anmeldenummer: 03090378.5
(22) Anmeldetag: 06.11.2003
(51) Int. Cl.: H02H 11/00, H02H 3/04

(54) **Schaltfehlerschutzgerät sowie Verfahren zu dessen Konfiguration**

(30) Priorität: 10.12.2002 DE 10258487
(71) Anmelder: SIEMENS AKTIENGESELLSCHAFT, 80333 München (DE)
(72) Erfinder: Burger, Jens, 14624 Dallgow-Döberitz (DE); Menke, Peter, Dr., 96237 Oberfüllbach (DE)

(57) **Zusammenfassung**

Ein Schaltfehlerschutzgerät (1) ist mehreren innerhalb eines Elektroenergieübertragungsnetzes angeordneten elektrischen Schaltgeräten zugeordnet. Unter Berücksichtigung von Zustandsgrößen und logischen Verknüpfungen sind die Schaltgeräte gegeneinander verriegelt. Das Schaltfehlerschutzgerät (1) weist ein Bedien- und Anzeigepaneel (2) sowie mehrere Funktionseinheiten (7a,b) auf, welche der Abbildung jeweils eines Schaltgerätes dienen. Die einzelnen Funktionseinheiten (7a,b) sind dabei zu- bzw. abschaltbar ausgebildet.

## Beschreibung

Die Erfindung bezieht sich auf ein Schaltfehlerschutzgerät für mehrere innerhalb eines Elektroenergieübertragungsnetzes angeordnete elektrische Schaltgeräte, mit einer Verriegelung, die unter Berücksichtigung von Zustandsgrößen und/oder logischen Verknüpfungen die Schaltgeräte gegeneinander verriegelt, sowie weiterhin auf ein Verfahren zum Konfigurieren eines derartigen Schaltfehlerschutzgerätes.

Aus dem Handbuch für das Schaltfehlerschutzgerät SIPROTEC® LCU 6MD680 der Siemens AG, ist es bekannt, mehrere Schaltgeräte gegeneinander zu verriegeln. Die Verriegelung erfolgt unter Berücksichtigung der jeweiligen Schaltzustände der elektrischen Schaltgeräte (S. 3-3 und folgende). Das bekannte Schaltfehlerschutzgerät ist so konstruiert, dass die logischen Verknüpfungen in dem Gerät selbst hinterlegt sind. Durch das Anschließen eines auswechselbaren Bedien- und Anzeigepaneels an das Schaltfehlerschutzgerät wird die passende logische Verknüpfung erkannt und die entsprechenden Verriegelungsbedingungen werden eingestellt (S. 3-2). Um das bekannte Schaltfehlerschutzgerät variabel einsetzen zu können, gibt es verschiedene Grundtypen des Bedien- und Anzeigepaneels. Diese Grundtypen sind darüber hinaus in weitere Varianten unterteilt (S. 2-5 und folgende). Somit ist es möglich, mit einem Schaltfehlerschutzgerät und verschiedenen Ausführungsvarianten eines mit dem Schaltfehlerschutzgerät zu verbindenden Bedien- und Anzeigepaneels, verschiedene Anordnungen, beispielsweise Kabelabgangsfelder oder Kuppelfelder, die sowohl Leistungsschalter, Trennschalter als auch Erdungsschalter, aufweisen, zu bedienen und zu steuern.

Die geforderte Variabilität für das bekannte Schaltfehlerschutzgerät ist durch den Einsatz einer Vielzahl von verschiedenen Bedien- und Anzeigepaneelen ermöglicht. Diese Vielzahl von Bedien- und Anzeigepaneelen bedingt einen hohen logistischen Aufwand, um stets die richtigen Paneele in der jeweils ausreichenden Anzahl für die verschiedenen Montageplätze bereitzustellen.

Der Erfindung liegt die Aufgabe zugrunde, ein Schaltfehlerschutzgerät der eingangs genannten Art so auszubilden, dass bei einer vereinfachten Ausgestaltung des Schaltfehlerschutzgerätes und des zugehörigen Bedien- und Anzeigepaneels weiterhin eine variable Verwendung des Schaltfehlerschutzgerätes ermöglicht wird.

Die Aufgabe wird bei einem Schaltfehlerschutzgerät der eingangs genannten Art erfindungsgemäß dadurch gelöst, dass das Schaltfehlerschutzgerät mehrere Funktionseinheiten zur Abbildung jeweils eines Schaltgerätes aufweist und dass jede Funktionseinheit zu- bzw. abschaltbar ist.

Mit dem Zu- und Abschalten von Funktionseinheiten zur Abbildung der Schaltgeräte ist eine große Variabilität hinsichtlich des Einsatzes des erfindungsgemäßen Schaltfehlerschutzgerätes gewährleistet. Jeder der Funktionseinheiten kann jeweils ein Schaltstellungsanzeiger und/oder eine Bedieneinrichtung zugeordnet sein. Bei einer "festen" Zuordnung der Schaltstellungsanzeiger und Bedieneinrichtungen, d.h. jeder Funktionseinheit ist genau eine Schaltstellungsanzeige und genau ein Bedienelement zugeordnet, welche zwangsweise bei einer Zu- bzw. Abschaltung der Funktionseinheit zu- bzw. abgeschaltet werden, sind zusätzliche Programmier- bzw. Einstellarbeiten nicht notwendig. Die Schaltstellungsanzeiger und die Bedieneinrichtungen können auf einem Bedien- und Anzeigepaneel angeordnet sein, welches dem Schaltfehlerschutzgerät fest zugeordnet ist. Jedem zu steuernden bzw. zu überwachenden Schaltgerät ist eine Funktionseinheit zugeordnet, welche den Zustand dieses Schaltgerätes repräsentiert. Dabei kann die Funktionseinheit wiederum aus mehreren voneinander räumlich getrennten Elementen gebildet sein. Eine derartige Funktionseinheit kann beispielsweise in konventioneller Schaltungstechnik, beispielsweise durch eine Verschaltung von Hilfskontakten mehrerer Schaltschütze, in elektronischer Form oder auch durch ein Programm bzw. einen Programmabschnitt für eine elektronische Datenverarbeitungsanlage gebildet sein. Durch einstellbare Hilfsschalter besteht die Möglichkeit, in die konventionelle Verschaltung, in die elektronische Schaltung oder das Programm einzugreifen und einzelne Funktionseinheiten, welche vorhandene Schaltgeräte abbilden, zuzuschalten und andere Funktionseinheiten, welche zur Abbildung eines realen Schaltfeldes, welches mehrere Schaltgeräte aufweist, nicht benötigt werden, abzuschalten. Ebenso wie Funktionseinheiten, welche Schaltgeräte abbilden, abschaltbar gestaltet sein können, besteht die Möglichkeit, auch Elemente der Funktionseinheiten, welche Zustandsgrößen der Schaltgeräte oder eines Schaltfeldes mit mehreren Schaltgeräten repräsentieren, je nach Bedarf zu- bzw. abzuschalten. Derartige Zustandsgrößen sind beispielsweise Informationen über den Druck eines Isoliergases einer druckgasisolierten Schaltanlage, über Temperaturen oder Lichtbogenerscheinungen.

Weiterhin kann zur Lösung der obenstehenden Aufgabe erfindungsgemäß vorgesehen sein, dass durch eine Bedieneinrichtung einer oder mehreren Funktionseinheiten jeweils ein abzubildendes Schaltgerät zugewiesen wird.

Durch eine Zuweisung von Funktionseinheiten zu jeweiligen Schaltgeräten sind verschiedene Schaltungstypen mit einem Schaltfehlerschutzgerät überwachbar. Die Zuweisung ermöglicht es je nach Bedarf eine bestimmte Topologie für das Schaltfehlerschutzgerät festzulegen. So ist es beispielsweise möglich, das Schaltfehlerschutzgerät zum Überwachen eines Kuppelfeldes, eines Abgangsfeldes usw. einzustellen. Damit wird zwischen den einzelnen Funktionseinheiten eine bestimmte Beziehung untereinander festgelegt. Bestimmte Funktionseinheiten sind dadurch beispielsweise als Sammelschienentrenner, Erdungsschalter oder auch Leistungsschalter definiert, welche wiederum in einer bestimmten Beziehung zueinander stehen. Die Zulässigkeit von Schalthandlungen bestimmt sich in Abhängigkeit der einzelnen Schaltgeräte untereinander. Die Zuweisung kann beispielsweise gruppenweise erfolgen, z. B. durch einen Umschalter als Bedieneinrichtung. Durch eine Bedienung der Bedieneinrichtung wird beispielsweise die gesamte Topologie eines abzubildenden Schaltfeldes eingestellt. In Abhängigkeit der eingestellten Topologie erfolgt eine Anpassung der erforderlichen Verriegelungsbedingungen. Damit ist ein zusätzliches Programmieren bzw. Einstellen der Verriegelungsbedingungen nicht notwendig. Zusätzlich kann es - wie oben stehend beschrieben - vorgesehen sein, die eingestellten standardisierten Topologien durch das Zu- bzw. Abschalten einzelner Funktionseinheiten an real vorhandene, vom Standard abweichende Schaltfelder anzupassen.

Eine weitere vorteilhafte Ausgestaltung der Erfindung kann vorsehen, dass bestimmte, zur Darstellung von Zuständen der Schaltgeräte an einem Anzeige- und Bedienpaneel angeordnete Darstellungselemente verbergbar sind.

Mit dem Verbergen von Darstellungselementen wird eine übersichtliche Gestalt des Bedien- und Anzeigepaneels für einen Bediener erzeugt. Das Verbergen kann beispielsweise durch ein Abdecken der Darstellungselemente oder durch ein Unterlassen der Ansteuerung eines Darstellungselementes, beispielsweise eines selbstleuchtenden Darstellungselementes, erfolgen. Derartige Darstellungselemente sind beispielsweise Melderelais, Schaltstellungsanzeiger und Leuchtmelder. Derartigen veränderlichen Darstellungselementen können auch passive Darstellungselemente zugeordnet sein. Passive Darstellungselemente sind beispielsweise Abbilder von Sammelschienenabschnitten, welche einzelne elektrische Schaltgeräte miteinander verbinden und auf dem Anzeige- und Bedienpaneel die Verschaltung der veränderlichen Darstellungselemente untereinander symbolisieren. Aufwendige Montage- oder Programmiervorgänge, welche das Anzeige- und Bedienpaneel an die vorhandene Verschaltung der Schaltgeräte anpasst, sind nicht erforderlich. Die Schaltfehlerschutzgeräte können in einer Serienproduktion mit einem standardisierten Bedien- und Anzeigepaneel hergestellt und ausgeliefert werden.

Vorteilhafterweise kann weiterhin vorgesehen sein, dass jede Funktionseinheit unabhängig von allen anderen Funktionseinheiten zu- bzw. abschaltbar ist.

Das unabhängige Zu- bzw. Abschalten von Funktionseinheiten ermöglicht eine sehr große Variabilität hinsichtlich der Anpassung des Schaltfehlerschutzgerätes an die nachzubildenden bzw. abzubildenden realen Bedingungen.

Weiterhin kann vorteilhaft vorgesehen sein, dass Funktionseinheiten gruppenweise zu- bzw. abschaltbar sind.

Das gruppenweise Zu- bzw. Abschalten gestattet es, mit wenigen Handgriffen das Schaltfehlerschutzgerät an die vorhandene Verschaltung der Schaltgeräte anzupassen. Dabei können durch das Betätigen einiger weniger Steuerschalter sogenannte Standardfelder, wie beispielsweise Kabelabgangsfelder, Kuppelfelder usw., zuverlässig und schnell modifiziert werden.

Eine weitere Aufgabe der Erfindung ist es, die Anpassung der logischen Verknüpfung des Schaltfehlerschutzgerätes in einer einfachen Weise zu ermöglichen.

Erfindungsgemäß wird dies durch ein Verfahren ermöglicht, nach welchem eine Änderung der logischen Verknüpfung beim Zu- bzw. Abschalten einer Funktionseinheit und/oder bei der Zuweisung des Schaltgerätes erfolgt.

Durch dieses Verfahren ist ein aufwendiges Programmieren bzw. Einstellen der logischen Verknüpfungen vermieden. Die Anpassung der logischen Verknüpfungen erfolgt mit der Zu- bzw. Abschaltung/Zuweisung der Funktionseinheiten.

Weiterhin kann vorteilhaft vorgesehen sein, dass nur sinnvolle Änderungen der logischen Verknüpfung zugelassen sind.

Durch die Einschränkung der logischen Verknüpfung der Funktionseinheiten auf sinnvolle Varianten wird eine Fehleinstellung des Schaltfehlerschutzgerätes verhindert. Somit ist sichergestellt, dass bei einer Vornahme der Einstellung des Schaltfehlerschutzgerätes die sich zwangsweise einstellenden logischen Verknüpfungen ein sicheres Schalten zulassen. So wird beispielsweise bei nicht sinnvollen Änderungen eine Schaltsperre aktiv. Es kann vorgesehen sein, die logischen Verknüpfungen innerhalb des Schaltfehlerschutzgerätes als eine übergeordnete, sämtliche mit dem Schaltfehlerschutzgerät abbildbaren Topologien und Schaltgeräte sowie Zustandsgrößen berücksichtigende logische Verknüpfung zu hinterlegen. Bei einem Abschalten von Funktionseinheiten wird jeweils der entsprechende Verknüpfungszweig der logischen Verknüpfungen herausgetrennt. Typischerweise erfolgt die Darstellung der logischen Verknüpfung in Form von Bool'schen Gleichungen. Diese Gleichungen sind dann in elektronischer Weise, beispielsweise in einem dauerhaften Speicher hinterlegt oder auch in Form von einer herkömmlichen Verschaltung von Hilfskontakten mehrerer Schaltschütze realisiert. Darüber hinaus sind auch Kombinationen aus herkömmlicher Verdrahtung und Speichern zur Realisierung der Verriegelung ausbildbar.

Im Folgenden wird die Erfindung anhand eines Ausführungsbeispiels in einer Zeichnung schematisch gezeigt und nachfolgend näher beschrieben.

Dabei zeigt die
- Figur: eine perspektivische Ansicht eines Schaltfehlerschutzgerätes mit einer teilweise freigeschnittenen Deckfläche.

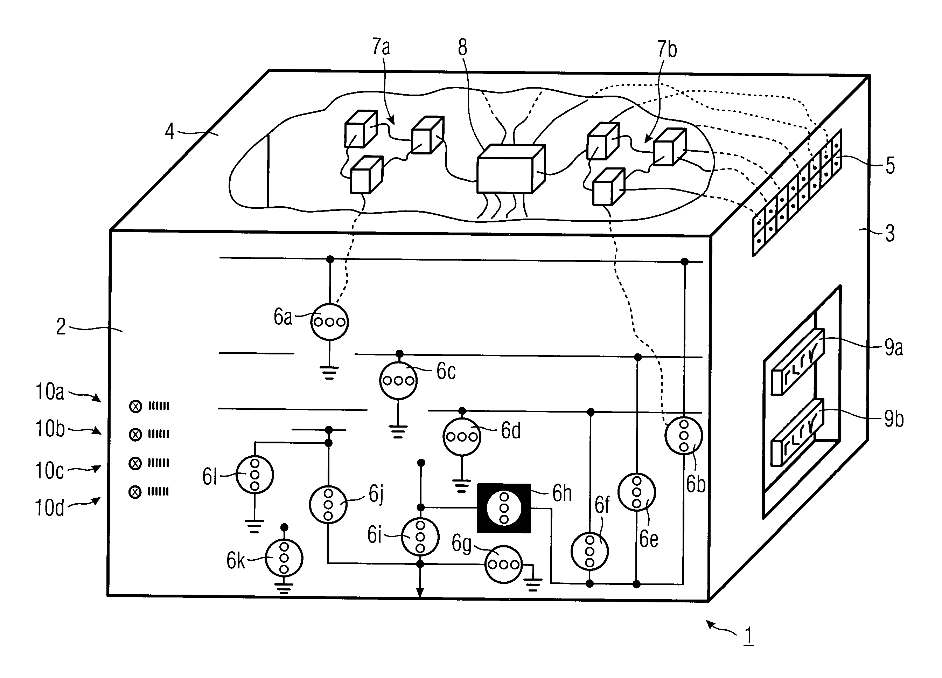

In der Figur ist ein Schaltfehlerschutzgerät 1 in einer perspektivischen Ansicht dargestellt. Das Schaltfehlerschutzgerät 1 weist eine Frontfläche 2, eine Seitenfläche 3 sowie eine Deckfläche 4 auf. Die Frontfläche 2 ist als fest zugeordnetes Bedien- und Anzeigepaneel ausgebildet. Das Schaltfehlerschutzgerät 1 vereinigt alle zu einem autarken Betrieb notwendigen Funktionseinheiten in einem kompakten Gehäuse. Die von einem Schaltfeld kommenden Steuerleitungen sind über eine Schnittstelle 5 an das Gerät angeschlossen. Die Schnittstelle 5 kann beispielsweise in Form einer Klemmleiste oder eines Steckkontaktes ausgebildet sein. Die dort einlaufenden Informationen sind beispielsweise Signale, welche von an Schaltgeräten angeordneten Sensoren generiert werden. Derartige Signale sind beispielsweise Informationen über die Schaltstellung des Schaltgerätes, beispielsweise Ein-, Aus-, Störstellung, oder auch Informationen über weitere Zustandsgrößen, wie beispielsweise Temperaturen, Gasdrücke, Informationen über den Zustand eines Schalterantriebes oder über das Vorhandensein und den Betrag einer Hilfsenergie. Weiterhin kann über die Schnittstelle 5 das Schaltfehlerschutzgerät 1 mit der für seine Funktion notwendigen elektrischen Energie versorgt werden sowie an die Schnittstelle 5 angeschlossene Sensoren mit Energie versorgt werden. Das an der Frontfläche 2 fest mit dem Schaltfehlerschutzgerät 1 verbundene Bedien- und Anzeigepaneel weist mehrere Schaltstellungsanzeiger 6a,b,c,d,e,f,g,h,i,j,k,l auf. Jeder der Schaltstellungsanzeiger 6a,b,c,d,e,f,g,h,i,j,k,l repräsentiert die Schaltzustände eines zu steuernden elektrischen Schaltgerätes. Jeder der Schaltstellungsanzeiger 6a,b,c,d,e,f,g,h,i,j,k,l wird jeweils von einer Funktionseinheit 7a, 7b angesteuert. Diese Funktionseinheiten können aus mehreren Modulen oder aus einem einzigen Modul gebildet sein. Weiterhin können die Funktionseinheiten verdrahtungsprogrammiert oder speicherprogrammiert sein. Die einzelnen den Schaltstellungsanzeigern 6a,b,c,d,e,f,g,h,i,j,k,l zugeordneten Funktionseinheiten wirken entweder in einem Netzwerk zusammen, wobei jede der Funktionseinheiten mit allen anderen Funktionseinheiten kommuniziert oder es ist - wie im vorliegenden Ausführungsbeispiel dargestellt -eine übergeordnete Zentraleinheit 8 vorsehbar, welche die Verknüpfung der einzelnen Funktionseinheiten untereinander realisiert. Die logischen Verknüpfungen sind in den zu- und abschaltbaren Funktionseinheiten und gegebenenfalls in der Zentraleinheit 8 hinterlegt. Durch das Zu- und Abschalten der Funktionseinheiten erfolgt eine Anpassung der logischen Verknüpfungen.

Mittels einer Bedieneinrichtung 9a ist das Schaltfehlerschutzgerät auf ein bestimmtes Schaltungsmuster (Topologie) einstellbar. Bei dem Vorhandensein mehrerer Schaltfelder mit Schaltgeräten, die gegeneinander zu verriegeln sind, ist jedem Schaltfeld ein Schaltfehlerschutzgerät zugeordnet. Über die Schnittstellen 5 der Schaltfehlerschutzgeräte erfolgt dann ein feldübergreifender Informationsaustausch.

Ein derartiges Schaltungsmuster entspricht beispielsweise der Topologie eines Schaltfeldes mit mehreren elektrischen Schaltgeräten. Durch die Bedieneinrichtung 9a werden den Funktionseinheiten 7a, b abzubildende Schaltgeräte zugewiesen. So bildet beispielsweise ein und dieselbe Funktionseinheit in einer ersten Topologie einen Sammelschienentrenner ab und in einer zweiten Topologie einen Kabeltrenner. Mittels der Bedieneinrichtung 9a ist eine bestimmte Topologie auswählbar. Die Bedieneinrichtung 9a kann beispielsweise als DIP-Schalter ausgeführt sein. Mit der Zuweisung der abzubildenden Schaltgeräte erfolgt ebenfalls eine Anpassung der logischen Verknüpfungen.

Jede der Funktionseinheiten ist über einen Schaltkontakt 9b zu- bzw. abschaltbar. Die Schaltkontakte 9b sind den Funktionseinheiten zugeordnet und können beispielsweise in Form von DIP-Schaltern ausgestaltet sein. Es sind jedoch auch weitere Ausgestaltungen vorsehbar, die ein Zu- oder Abschalten beispielsweise über das Einlegen von Brücken oder Steckkontakten ermöglicht. Durch eine Zu- bzw. Abschaltung von Funktionseinheiten mittels der Schaltkontakte 9b sind die im Vorfeld über die Bedieneinrichtung 9a voreingestellten Topologien an die vorhandenen, abzubildenden Verhältnisse anpassbar.

Weiterhin können die Schaltkontakte 9b vorgesehen sein, um eine Verarbeitung von Informationen einzelner Zustandsgrößen wie Temperaturen, Drücke je nach den vorhandenen Gegebenheiten zu unterdrücken oder zuzulassen. Zur Signalisierung einer Störung der voranstehend beispielhaft genannten Größen sind auf den Bedien- und Anzeigepaneels mehrere Leuchtmelder 10a,b,c,d angeordnet. Ein Zu- bzw. Abschalten der Leuchtmelder 10a,b,c,d bewirkt eine Berücksichtigung oder ein Ausblenden dieser Information in den logischen Verknüpfungen.

Nachdem das Schaltfehlerschutzgerät 1 entsprechend konfiguriert ist und die nicht benötigten Funktionseinheiten und Leuchtmelder 10a,b,c,d abgeschaltet sind, besteht die Möglichkeit, die zur Repräsentation des Schaltzustandes der Schaltanlage nicht mehr notwendigen Schaltstellungsanzeiger 6a,b,c,d,e,f,g,h,i,j,k,l bzw. Leuchtmelder 10a,b,c,d durch eine Abdeckung vor einem Bediener zu verbergen. Dadurch ist die Möglichkeit von Fehlbedienungen durch den Bediener eingeschränkt. Weiterhin ist dies eine kostengünstige Variante, um vorgefertigte Schaltfehlerschutzgeräte 1 an die vorhandenen Schaltfelder von Schaltanlagen anzupassen, ohne dazu in die interne Verdrahtung bzw. Steuerung des Schaltfehlerschutzgerätes 1 eingreifen zu müssen. Alternativ sind die Schaltstellungsanzeiger 6a,b,c,d,e,f,g,h,i,j,k,l und die Leuchtmelder 10a,b,c,d beispielsweise durch ein oder mehrere LCD-Module, welche als Darstellungselemente verschiedene Pixel aufweisen, ausführbar. Die entsprechend vorgesehenen Darstellungselemente bzw. Pixel werden durch eine Ansteuerung des LCD-Moduls vor dem Bediener verborgen. Um die Bedienung weiter zu vereinfachen, sind die Schaltstellungsanzeiger 6a,b,c,d,e,f,g,h,i,j,k,l in dem vorliegenden Ausführungsbeispiel auf dem Bedien- und Anzeigepaneel verteilt angeordnet. Zur Komplettierung des Bedien- und Anzeigepaneels ist auf der Frontfläche ein Schaltplan anordbar, welcher die entsprechenden elektrischen Verbindungen der Schaltgeräte untereinander darstellt. Über das Bedien- und Anzeigepaneel kann dann auch eine Bedienung der einzelnen Schaltgeräte vor Ort erfolgen. Durch das Schaltfehlerschutzgerät 1 werden bestimmte Schalthandlungen gegeneinander verriegelt, so dass beispielsweise festgelegten Reihenfolgen von Schalthandlungen zwangsweise eingehalten werden oder auch bestimmte Schaltgeräte nur dann schaltbar sind, wenn andere Schaltgeräte eine bestimmte Schaltstellung aufweisen und/oder Zustandsgrößen bestimmte Werte aufweisen.

## Patentansprüche

1. Schaltfehlerschutzgerät (1) für mehrere innerhalb eines Elektroenergieübertragungsnetzes angeordnete elektrische Schaltgeräte, mit einer Verriegelung, die unter Berücksichtigung von Zustandsgrößen und/oder logischen Verknüpfungen die Schaltgeräte gegeneinander verriegelt,
**dadurch gekennzeichnet, dass**
das Schaltfehlerschutzgerät (1) mehrere Funktionseinheiten (7a,b) zur Abbildung jeweils eines Schaltgerätes aufweist und dass jede Funktionseinheit (7a,b) zu- bzw. abschaltbar ist.

2. Schaltfehlerschutzgerät (1) für mehrere innerhalb eines Elektroenergieübertragungsnetzes angeordnete elektrische Schaltgeräte, mit einer Verriegelung, die unter Berücksichtigung von Zustandsgrößen und/oder logischen Verknüpfungen die Schaltgeräte gegeneinander verriegelt,
**dadurch gekennzeichnet, dass**
durch eine Bedieneinrichtung (9a) einer oder mehreren Funktionseinheiten (7a, b) jeweils ein abzubildendes Schaltgerät zugewiesen wird.

3. Schaltfehlerschutzgerät (1) nach Anspruch 1 oder 2,
**dadurch gekennzeichnet, dass**
bestimmte, zur Darstellung von Zuständen der Schaltgeräte an einem Anzeigepaneel (2) angeordnete Darstellungselemente (6a,b,c,d,e,f,g,h,i,j,k,l) verbergbar sind.

4. Schaltfehlerschutzgerät (1) nach einem der Ansprüche 1 oder 3,
**dadurch gekennzeichnet, dass**
jede Funktionseinheit (7a,b) unabhängig von allen anderen Funktionseinheiten zu- bzw. abschaltbar ist.

5. Schaltfehlerschutzgerät (1) nach einem der Ansprüche 1, 3 oder 4,
**dadurch gekennzeichnet, dass** Funktionseinheiten (7a,b) gruppenweise zu- bzw. abschaltbar sind.

6. Verfahren zur Konfiguration eines Schaltfehlerschutzgerätes (1) gemäß den Ansprüchen 1 bis 5, **gekennzeichnet durch**,
eine Änderung der logischen Verknüpfung beim Zu- bzw. Abschalten einer Funktionseinheit (7a,b) und/oder bei der Zuweisung des Schaltgerätes.

7. Verfahren zur Konfiguration eines Schaltfehlerschutzgerätes (1) nach Anspruch 6,
**dadurch gekennzeichnet, dass**
nur sinnvolle Änderungen der logischen Verknüpfung zugelassen sind.
